# EUROPEAN PATENT APPLICATION

(11) **EP 4 455 879 A1**
(43) Date of publication of application: **30.10.2024**
(21) Application number: 24167588.3
(22) Date of filing: 28.03.2024
(51) Int. Cl.: G06F 9/50

(54) **METHODS AND APPARATUS TO MANAGE CLOUD COMPUTING RESOURCES**

(30) Priority: 07.04.2023 US 202318297174
(71) Applicant: VMware LLC, Palo Alto, CA 94304 (US)
(72) Inventor: Raikov, Ventsyslav, 1797 Sofia (BG); Dzhigarov, Marin, 1151 Sofia (BG); Mitrov, Petar, 1797 Sofia (BG); Genchev, Stoyan, 1700 Sofia (BG); Dimitrov, Alexander, 1797 Sofia (BG); Todorov, Atanas, 1797 Sofia (BG)
(74) Representative: Dilg, Haeusler, Schindelmann Patentanwaltsgesellschaft mbH

(57) **Abstract**

Methods and apparatus to manage cloud computing resources are disclosed. An example apparatus includes network interface circuitry; computer readable instructions; and programmable circuitry to instantiate: group management circuitry to determine a group identifier associated with a resource to be provisioned; allocation circuitry to: determine an intersection of placements for resources associated with the group identifier; validate a rule for the intersection; and cause provisioning of the resources when the placement rule passes.

## Description

### FIELD OF THE DISCLOSURE

This disclosure relates generally to computing resources and, more particularly, to methods and apparatus to manage cloud computing resources.

### BACKGROUND

Cloud computing involves the delivery of computing resources including storage, processing power, databases, networking, analytics, artificial intelligence, and software applications via a networked data center. Cloud servers can include compute, memory, and/or storage resources to remotely perform services and functions for an organization. As the use of cloud computing has involved, so has the introduction and use of tools to manage such cloud computing resources and deployments.

### BRIEF DESCRIPTION OF THE DRAWINGS

FIG. 1 is a block diagram of an example environment in which an example allocation circuitry of a cloud manager operates to manage the provisioning of cloud computing resources.
FIG. 2 is a block diagram of an example implementation of the provisioning circuitry 102 of FIG. 1.
FIG. 3 is a flowchart representative of an example high level process for provisioning cloud computing resources.
FIGS. 4-8 are flowcharts representative of example machine readable instructions and/or example operations that may be executed, instantiated, and/or performed by example programmable circuitry to implement the allocation circuitry of FIG. 2.
FIG. 9 is a block diagram of an example processing platform including programmable circuitry structured to execute, instantiate, and/or perform the example machine readable instructions and/or perform the example operations of FIGS. 4-8 to implement the provisioning circuitry 102 of FIG. 2.
FIG. 10 is a block diagram of an example implementation of the programmable circuitry of FIG. 9.
FIG. 11 is a block diagram of another example implementation of the programmable circuitry of FIG. 9.

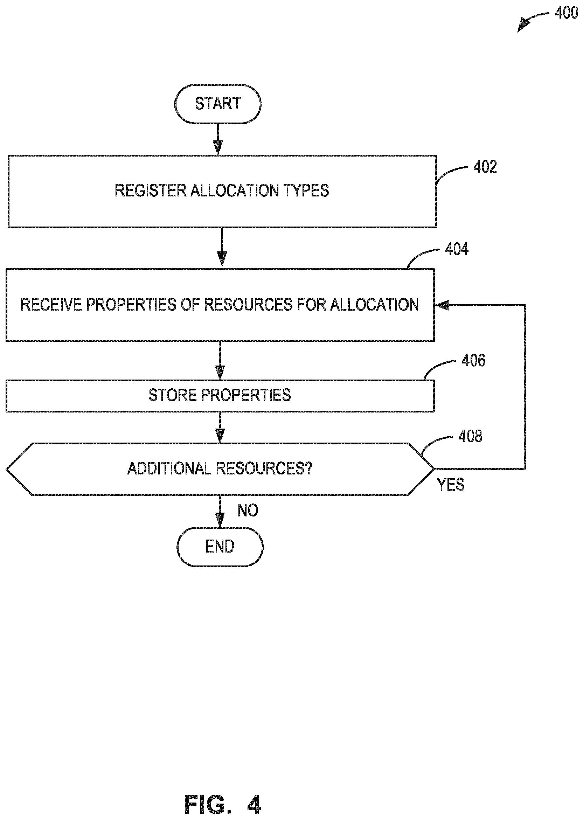

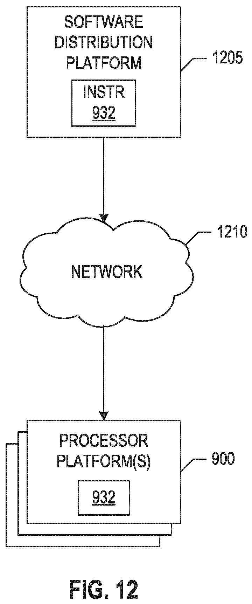

FIG. 12 is a block diagram of an example software/firmware/instructions distribution platform (e.g., one or more servers) to distribute software, instructions, and/or firmware (e.g., corresponding to the example machine readable instructions of FIGS. 4-8) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

In recent years, increasingly large and complex computational workloads (e.g., artificial intelligence, cryptography, scientific simulations, etc.) have been deployed to cloud servers. Such workloads may be associated with a large numbers of virtual machines, containers, and/or other cloud resources, which may be spread across multiple cloud providers. In a virtual infrastructure, such as a multi-cloud management platform, a cloud endpoint is a system and/or a service on which a user can provision resources. The cloud endpoint may be a public cloud resource (e.g., a web service such as Amazon Web Services (AWS), etc.), a virtual appliance (e.g., an external orchestrator appliance, etc.), a private cloud (e.g., hosted by VMware vSphere^{™}, Microsoft Hyper-V^{™}, etc.), etc. A service may have multiple cloud endpoints, such as a catalog service that provides catalog features for a shell/user interface application service to consume. Cloud endpoints may include physical endpoints, virtual endpoints, Internet Protocol Address Management (IPAM) endpoints, etc.

Virtualization technologies can be used for computing, storage, and/or networking. Using virtualization, hardware computing resources and/or other physical resources can be replicated in software. One or more application programming interfaces (APIs) can be implemented to provide access to virtualized resources for users, applications, and/or systems while limiting or masking underlying software and/or hardware structures. Virtualization is increasingly executed in the cloud environment.

Cloud environments can be complex, with a large number of resources to be managed and configured. This can make it difficult for organizations to ensure that their cloud resources are configured correctly and for optimized performance. Cloud management services (e.g., VMware^{®} VRealize^{®} Automation^{™}, VMware Aria Automation, etc.) allow a user to create and/or otherwise deploy machines, applications, and/or services to a cloud infrastructure. Such cloud management services may include a blueprint development and deployment service. A deployment in a cloud-based service is a provisioned instance of a blueprint. As used herein, blueprints are specifications that define machines, applications, and/or services that can be deployed to cloud resources. Blueprints may be developed to target specific cloud vendors and/or resources (e.g., Amazon^{®} Web Services (AWS)^{®}, a virtual appliance such as an external orchestrator appliance, etc., VMware vSphere^{™}, Microsoft Hyper-V^{™}, etc.).

The creation of blueprints is typically performed as an infrastructure as code (IaC) process. Infrastructure as code (IaC) allows organizations to automate provisioning and configuration of one or more cloud resources. The one or more cloud resources may be distributed across one or more cloud resource providers. IaC also makes it easier to maintain and update cloud infrastructure over time, scale cloud infrastructure up or down as needed, and efficiently respond to changing business needs.

When a blueprint is deployed, a cloud management service (e.g., vRealize Automation) may use a set of rules and policies to automatically provision and configure the necessary resources to create the desired virtual environment. This can include deploying virtual machines from templates, creating networks and storage, and configuring various software components and settings. By using blueprints, organizations can ensure consistency and repeatability in their virtualized environments, while also reducing the amount of effort required for deployment and maintenance of the virtualized environment. Additionally, blueprints can be versioned and shared across teams, making it easier to collaborate and streamline the development and deployment process.

Infrastructure as data (IaD) further simplifies the blueprint deployment process, expanding upon the IaC concept and reducing cloud configuration to data. IaD is a declarative approach to deployment and management of cloud infrastructure. A user can describe a desired state (e.g., in an IDEM (e.g., idempotent) .sls file) without specifying precise actions or steps for how to achieve the state. Then, cloud provisioning circuitry can deploy and/or modify the cloud infrastructure to achieve the described state. Through use of an infrastructure data file (e.g., an IDEM .sls file, a JSON file, etc.) instead of a script, deployment and maintenance of cloud infrastructure can be simplified. As described herein, an infrastructure data file is a file which includes declarative statements for deployment and management of cloud infrastructure and/or cloud applications. That is, an infrastructure data file includes statements (e.g., declarative statements) which define a desired state for the infrastructure. The infrastructure data file may specify a state for the infrastructure without defining actions or steps for how to achieve it. Instead, the infrastructure data file is provided to a program which can translate the desired state into actions to deploy the cloud resource.

An important feature of cloud management services such as vRealize Automation is template management (e.g., VMware cloud template(VCT)). Template management allows infrastructure adapters and/or providers to register their endpoints and the resources they support. A resource registration in the template management includes a set of core operations that the resource may support such as ALLOCATE, CREATE, UPDATE, READ and DELETE.

Allocation in cloud management services means validating requested resources towards the available configurations (e.g., in a database) such as cloud accounts, image, network and storage profiles, project settings and quotas, etc. Validation may include finding the correct infrastructure to provision the resource and updating the quotas in the database. Allocation logic may be implemented in a provisioning microservice, but may be supported only for resources provided by provisioning microservice. The functionality is also quite huge and complex.

Allocation is typically run first for all resources that support it (e.g., either sequentially or in parallel if the resources do not have dependencies). Then, provisioning/create is executed in the same manner after the allocation completes. For example, allocation may be run before provisioning to ensure that provisioning does not encounter failures. For example, if any provisioning failures are encountered (e.g., incompatible resource combinations), the cloud management service will typically rollback all provisioned resources for the deployment. Such failures and rollback waste time and resources.

In some systems, a provisioning service may include a facade in front of cloud adapters that provide integrations to public or private clouds like AWS, Azure, or vSphere. As cloud management resources have evolved, new providers have come into use integrating directly with the template management. However, some new providers don't support allocation (e.g., because they didn't want to reimplement the complex logic already present in the provisioning service).

Methods and apparatus disclosed herein support adding allocation functionality for providers that do not natively support allocation. An example allocation circuitry provides helpers that can perform preallocation and allocation. Such helpers may be resource specific (e.g., a compute allocation helper to find placement for a virtual machine based on constraints of the deployment, a network allocation helper to find network resources based on network profiles, networks types, and network constraints, an internet protocol (IP) allocation helper to allocation one or more IP addresses on a given network, a storage allocation helper to find appropriate storage based on deployment constraints, etc.).

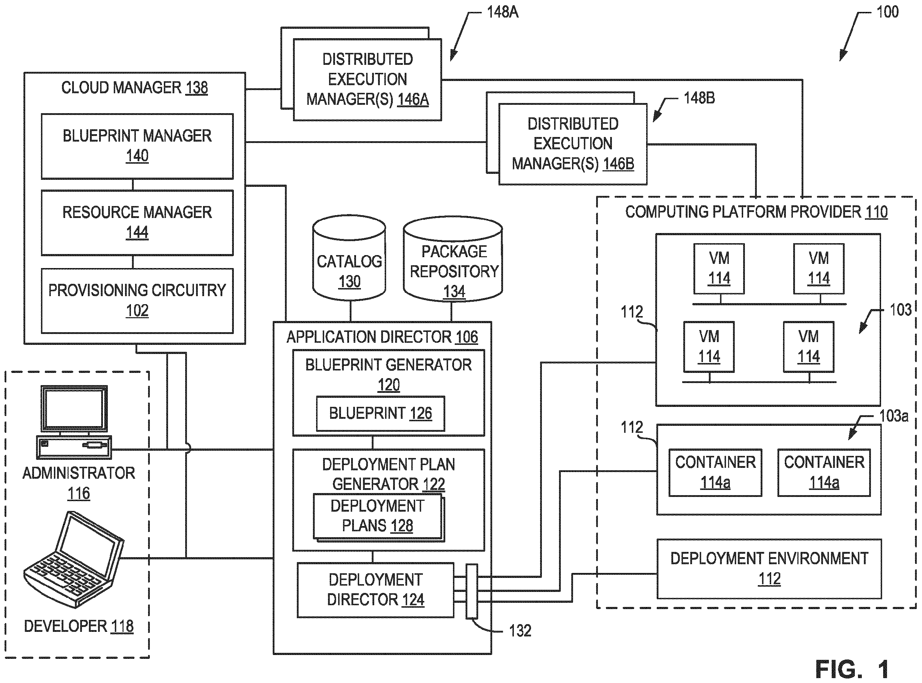

FIG. 1 is a block diagram of an example environment 100 in which an example provisioning circuitry 102 operates to provision resources in computing environments.

The example environment 100 includes an application director 106 and a cloud manager 138 to manage a computing platform provider 110 as described in more detail below. As described herein, the example environment 100 facilitates management of the provider 110 and does not include the provider 110. Alternatively, the environment 100 can be included in the provider 110.

The computing platform provider 110 provisions virtual computing resources (e.g., virtual machines, or "VMs," 114) that may be accessed by users of the computing platform (e.g., users associated with an administrator 116 and/or a developer 118) and/or other programs, software, device. etc.

An example application 103 implemented via the computing platform provider 110 of FIG. 1 includes multiple VMs 114. The example VMs 114 of FIG. 1 provide different functions within the application 103 (e.g., services, portions of the application 103, etc.). One or more of the VMs 114 of the illustrated example are customized by an administrator 116 and/or a developer 118 of the application 103 relative to a stock or out-of-the-box (e.g., commonly available purchased copy) version of the services and/or application components. Additionally, the services executing on the example VMs 114 may have dependencies on other ones of the VMs 114.

As illustrated in FIG. 1, the example computing platform provider 110 may provide multiple deployment environments 112, for example, for development, testing, staging, and/or production of applications. The administrator 116, the developer 118, other programs, and/or other devices may access services from the computing platform provider 110, for example, via REST (Representational State Transfer) APIs (Application Programming Interface) and/or via any other client-server communication protocol. Example implementations of a REST API for cloud and/or other computing services include a vCloud Administrator Center^{™} (vCAC) and/or vRealize Automation^{™} (vRA) API and a vCloud Director^{™} API available from VMware, Inc. The example computing platform provider 110 provisions virtual computing resources (e.g., the VMs 114) to provide the deployment environments 112 in which the administrator 116 and/or the developer 118 can deploy multi-tier application(s). One particular example implementation of a deployment environment that may be used to implement the deployment environments 112 of FIG. 1 is vCloud DataCenter cloud computing services available from VMware, Inc.

In some examples disclosed herein, a lighter-weight virtualization is employed by using containers in place of the VMs 114 in the development environment 112. Example containers 114a are software constructs that run on top of a host operating system without the need for a hypervisor or a separate guest operating system. Unlike virtual machines, the containers 114a do not instantiate their own operating systems. Like virtual machines, the containers 114a are logically separate from one another. Numerous containers can run on a single computer, processor system and/or in the same development environment 112. Like virtual machines, the containers 114a can execute instances of applications or programs (e.g., an example application 103 a) separate from application/program instances executed by the other containers in the same development environment 112.

The example application director 106 of FIG. 1, which may be running in one or more VMs, orchestrates deployment of multi-tier applications onto one of the example deployment environments 112. As illustrated in FIG. 1, the example application director 106 includes a blueprint generator 120, a deployment plan generator 122, a deployment director 124, and provisioning circuitry 102.

The example blueprint generator 120 generates a basic blueprint 126 that specifies a logical topology of an application to be deployed. The example basic blueprint 126 generally captures the structure of an application as a collection of application components executing on virtual computing resources. For example, the basic blueprint 126 generated by the example blueprint generator 120 for an online store application may specify a web application (e.g., in the form of a Java web application archive or "WAR" file including dynamic web pages, static web pages, Java servlets, Java classes, and/or other property, configuration and/or resources files that make up a Java web application) executing on an application server (e.g., Apache Tomcat application server) that uses a database (e.g., MongoDB) as a data store. As used herein, the term "application" generally refers to a logical deployment unit, including one or more application packages and their dependent middleware and/or operating systems. Applications may be distributed across multiple VMs. Thus, in the example described above, the term "application" refers to the entire online store application, including application server and database components, rather than just the web application itself. In some instances, the application may include the underlying hardware and/or virtual computing hardware utilized to implement the components.

The example basic blueprint 126 of FIG. 1 may be assembled from items (e.g., templates) from a catalog 130, which is a listing of available virtual computing resources (e.g., VMs, networking, storage, etc.) that may be provisioned from the computing platform provider 110 and available application components (e.g., software services, scripts, code components, application-specific packages) that may be installed on the provisioned virtual computing resources. The example catalog 130 may be pre-populated and/or customized by an administrator 116 (e.g., IT (Information Technology) or system administrator) that enters in specifications, configurations, properties, and/or other details about items in the catalog 130. Based on the application, the example blueprints 126 may define one or more dependencies between application components to indicate an installation order of the application components during deployment. For example, since a load balancer usually cannot be configured until a web application is up and running, the developer 118 may specify a dependency from an Apache service to an application code package.

The example deployment plan generator 122 of the example application director 106 of FIG. 1 generates a deployment plan 128 based on the basic blueprint 126 that includes deployment settings for the basic blueprint 126 (e.g., virtual computing resources' cluster size, CPU, memory, networks, etc.) and an execution plan of tasks having a specified order in which virtual computing resources are provisioned and application components are installed, configured, and started. The example deployment plan 128 of FIG. 1 provides an IT administrator with a process-oriented view of the basic blueprint 126 that indicates discrete actions to be performed to deploy the application. Different deployment plans 128 may be generated from a single basic blueprint 126 to test prototypes (e.g., new application versions), to scale up and/or scale down deployments, and/or to deploy the application to different deployment environments 112 (e.g., testing, staging, production). The deployment plan 128 is separated and distributed as local deployment plans having a series of tasks to be executed by the VMs 114 provisioned from the deployment environment 112. Each VM 114 coordinates execution of each task with a centralized deployment module (e.g., the deployment director 124) to ensure that tasks are executed in an order that complies with dependencies specified in the application blueprint 126.

The example deployment director 124 of FIG. 1 executes the deployment plan 128 by communicating with the computing platform provider 110 via an interface 132 to provision and configure the VMs 114 in the deployment environment 112. The example interface 132 of FIG. 1 provides a communication abstraction layer by which the application director 106 may communicate with a heterogeneous mixture of provider 110 and deployment environments 112. The deployment director 124 provides each VM 114 with a series of tasks specific to the receiving VM 114 (herein referred to as a "local deployment plan"). Tasks are executed by the VMs 114 to install, configure, and/or start one or more application components. For example, a task may be a script that, when executed by a VM 114, causes the VM 114 to retrieve and install particular software packages from a central package repository 134. The example deployment director 124 coordinates with the VMs 114 to execute the tasks in an order that observes installation dependencies between VMs 114 according to the deployment plan 128. After the application has been deployed, the application director 106 may be utilized to monitor and/or modify (e.g., scale) the deployment.

The example cloud manager 138 of FIG. 1 interacts with the components of the environment 100 (e.g., the application director 106 and the provider 110) to facilitate the management of the resources of the provider 110.

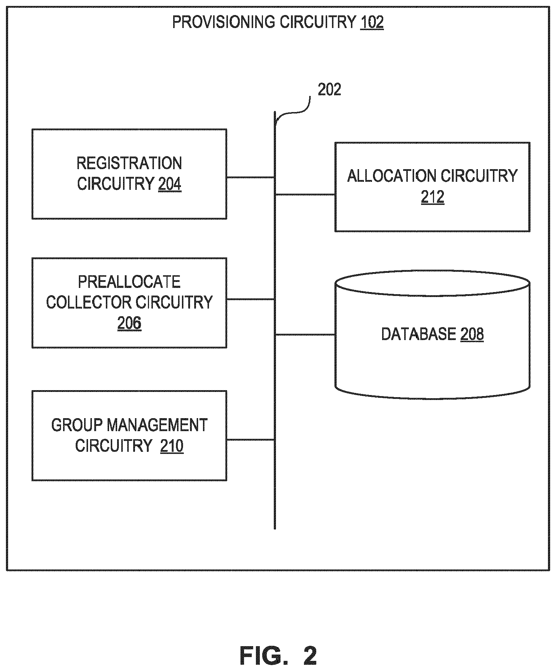

The example provisioning circuitry 102 determines resources for the components of an application (e.g., a blueprint) to be deployed and causes provisioning of the components of the application on the identified resources. The components of the example include application images, storage, compute resources (e.g., processing, memory, etc.), flavor (e.g., groups of deployment resources such as, for example, low performance, mid performance, high performance), network resources, IP resources). Alternatively, any other type of components may be handled. The example provisioning circuitry 102 can perform preallocation and allocation of resources even when an adapter that connects to a particular provider does not support such preallocation and allocation. For example, if a provider has an adapter to provision resources in their cloud, but they provide an adapter to the cloud manager 138 that does not support preallocation and/or allocation, the provisioning circuitry 102 can perform such preallocation and/or allocation. The example provisioning circuitry 102 registers supported allocation types with the template provider (e.g., the blueprint generator 120 of the application director 106). Further details of the provisioning circuitry 102 are described in conjunction with FIG. 2 and the flowcharts of FIGS. 4-8.

The example manager 138 includes a blueprint manager 140 to facilitate the creation and management of multi-machine blueprints and a resource manager 144 to reclaim unused cloud resources. The manager 138 may additionally include other components for managing a cloud environment.

The example blueprint manager 140 of the illustrated example manages the creation of multi-machine blueprints that define the attributes of multiple virtual machines as a single group that can be provisioned, deployed, managed, etc. as a single unit. For example, a multi-machine blueprint may include definitions for multiple basic blueprints that make up a service (e.g., an e-commerce provider that includes web servers, application servers, and database servers). A basic blueprint is a definition of policies (e.g., hardware policies, security policies, network policies, etc.) for a single machine (e.g., a single virtual machine such as a web server virtual machine and/or container). Accordingly, the blueprint manager 140 facilitates more efficient management of multiple virtual machines and/or containers than manually managing (e.g., deploying) basic blueprints individually.

The example blueprint manager 140 of FIG. 1 additionally annotates basic blueprints and/or multi-machine blueprints to control how workflows associated with the basic blueprints and/or multi-machine blueprints are executed. As used herein, a workflow is a series of actions and decisions to be executed in a virtual computing platform. The example environment 100 includes first and second distributed execution manager(s) (DEM(s)) 146A and 146B to execute workflows. According to the illustrated example, the first DEM 146A includes a first set of characteristics and is physically located at a first location 148A. The second DEM 146B includes a second set of characteristics and is physically located at a second location 148B. The location and characteristics of a DEM may make that DEM more suitable for performing certain workflows. For example, a DEM may include hardware particularly suited for performance of certain tasks (e.g., high-end calculations), may be located in a desired area (e.g., for compliance with local laws that require certain operations to be physically performed within a country's boundaries), may specify a location or distance to other DEMS for selecting a nearby DEM (e.g., for reducing data transmission latency), etc. Thus, the example blueprint manager 140 annotates basic blueprints and/or multi-machine blueprints with capabilities that can be performed by a DEM that is labeled with the same or similar capabilities.

The resource manager 144 of the illustrated example facilitates recovery of computing resources of the provider 110 that are no longer being actively utilized. Automated reclamation may include identification, verification and/or reclamation of unused, underutilized, etc. resources to improve the efficiency of the running cloud infrastructure.

FIG. 2 is a block diagram of an example implementation of the provisioning circuitry 102 of FIG. 1 to perform preallocation, allocation, and/or provisioning of resources (e.g., on the computing platform provider 110 of FIG. 1). The provisioning circuitry 102 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the provisioning circuitry 102 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example provisioning circuitry 102 of FIG. 2 includes example an example bus interconnecting example registration circuitry 204, example preallocate collector circuitry 206, an example database 208, example group management circuitry 210, and example allocation circuitry 212.

The example registration circuitry 204 collects information about allocation types supported by the provisioning circuitry 102 and registers the allocation types with the template manager (e.g., the application director 106, a VMware Cloud Template (VCT) provider, etc.). Example allocation types include application images, storage, compute resources (e.g., processing, memory, etc.), flavor (e.g., groups of deployment resources such as, for example, low performance, mid performance, high performance), network resources, IP resources, etc. Registering the allocation types with the template manager instructs the template manager on how to request allocation of the allocation types. For example, the registration circuitry may transmit one or more network messages that include one or more schemas that identify fields and valid values for requesting allocation and provisioning.

In some examples, the registration circuitry 204 is instantiated by programmable circuitry executing registration instructions and/or configured to perform operations such as those represented by the flowchart(s) of FIG. 4.

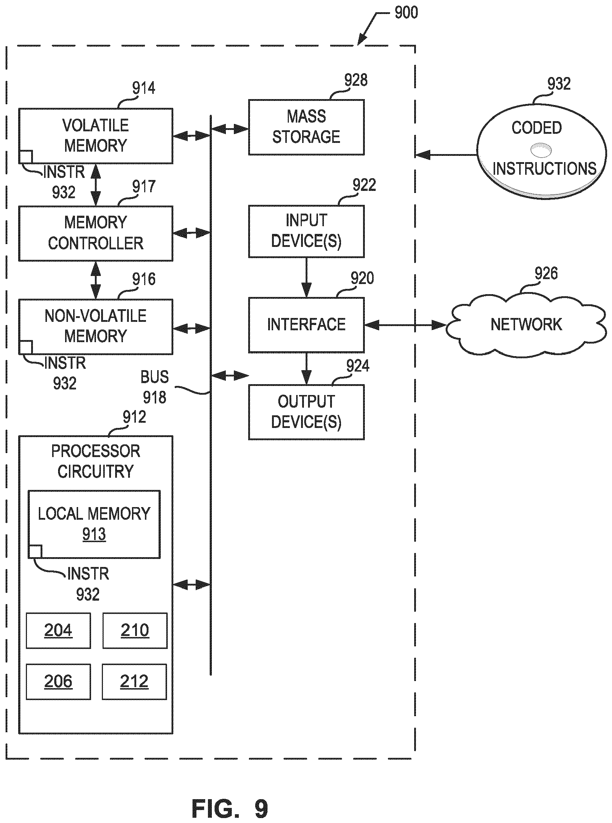

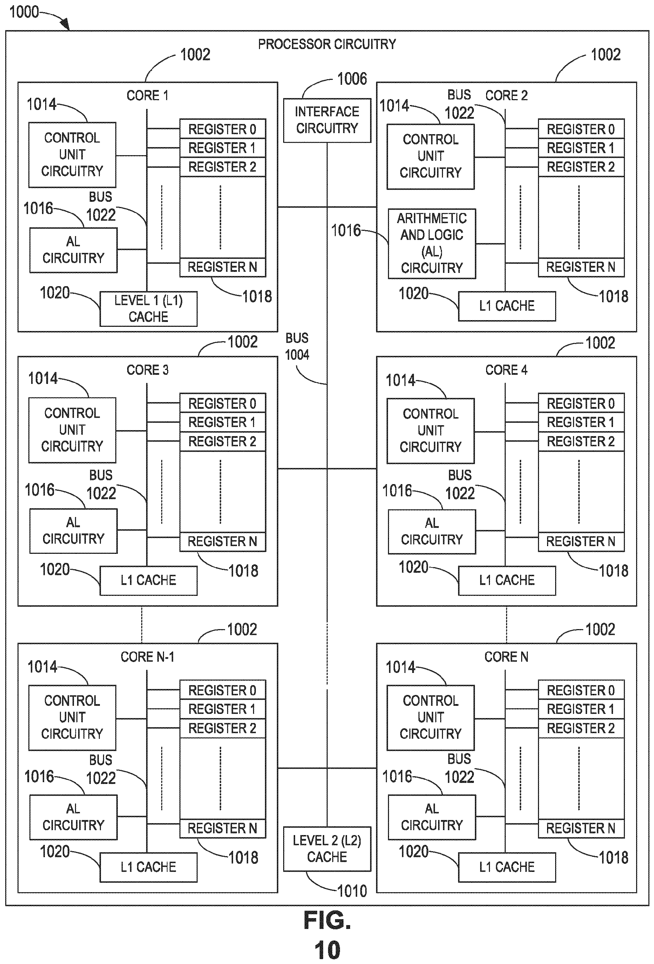

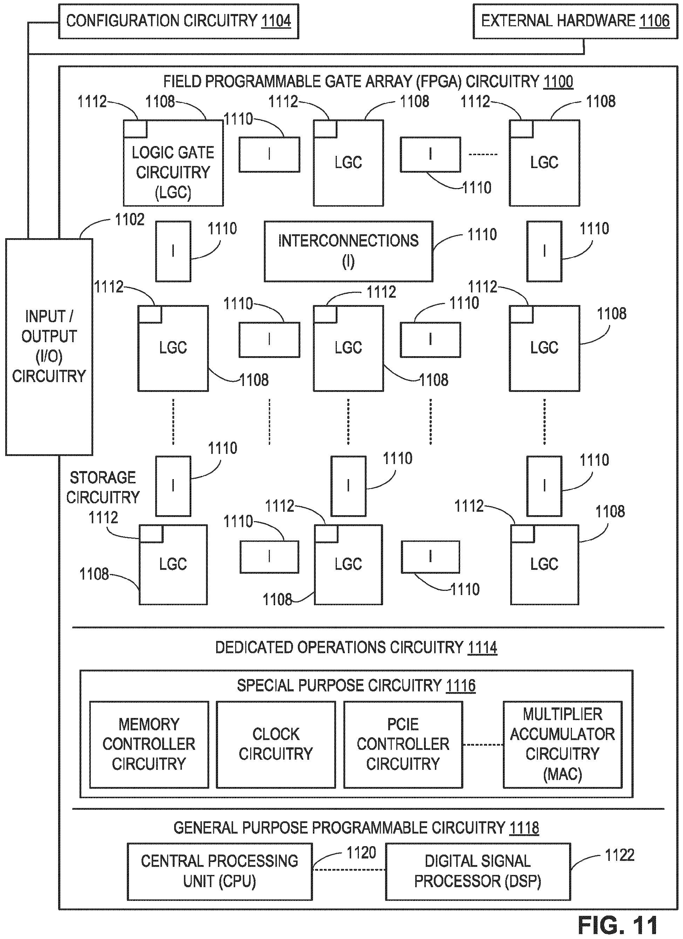

In some examples, the provisioning circuitry 102 includes means for registering allocation types with a template manager. For example, the means for registering may be implemented by registration circuitry 204. In some examples, the registration circuitry 204 may be instantiated by programmable circuitry such as the example programmable circuitry 912 of FIG. 9. For instance, the registration circuitry 204 may be instantiated by the example microprocessor 1000 of FIG. 10 executing machine executable instructions such as those implemented by at least block 402 of FIG. 4. In some examples, the registration circuitry 204 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the registration circuitry 204 may be instantiated by any other combination of hardware, software, and/or firmware. For example, the registration circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example preallocate collector circuitry 206 collects properties of resources that are to be allocated. For example, after a provisioning request is received at the template manager, the template manager calls a provider's preallocation process for each resource to be allocated. The template manager transmits the properties of the resources to the preallocate collector circuitry 206, which stores the properties in the example database 208. The properties may include one or more of a network identifier, a cloud account, a location/zone/region, an image, etc.).

In some examples, the preallocate collector circuitry 206 is instantiated by programmable circuitry executing registration instructions and/or configured to perform operations such as those represented by the flowchart(s) of FIG. 4.

In some examples, the provisioning circuitry 102 includes means for collecting information about preallocation of resources received from a template manager or other preallocation management. For example, the means for collecting preallocation information may be implemented by the preallocate collector circuitry 206. In some examples, the preallocate collector circuitry 206 may be instantiated by programmable circuitry such as the example programmable circuitry 912 of FIG. 9. For instance, the preallocate collector circuitry 206 may be instantiated by the example microprocessor 1000 of FIG. 10 executing machine executable instructions such as those implemented by at least blocks 404 - 408 of FIG. 4. In some examples, the preallocate collector circuitry 206 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the preallocate collector circuitry 206 may be instantiated by any other combination of hardware, software, and/or firmware. For example, the preallocate collector circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example database 208 is a database for storing preallocation property information. Alternatively, the database 208 may be any other type of datastore such as, for example, disk storage, memory storage, file storage, local storage, remote storage, any type of data structure, etc. and/or any combination of storage types.

The example group management circuitry 210 determines groups of resources to be deployed and assigns a group identifier. For example, a blueprint or other type of template may include multiple groups of resources to be deployed. A group of resources for allocation is a set of resources that have direct or indirect dependencies (e.g., two virtual machines in the same network). In some examples, all resources in a group have affinity and should be provisioned on the same endpoint, same region, same zone, etc. According to the illustrated example, the groups are identified by iterating over the resources to identify dependencies and grouping resources that have direct or indirect dependency. Alternatively, groups of resources may be identified by an administrator building a blueprint or other type of template.

In some examples, the group management circuitry 210 is instantiated by programmable circuitry executing registration instructions and/or configured to perform operations such as those represented by the flowchart(s) of FIG. 4.

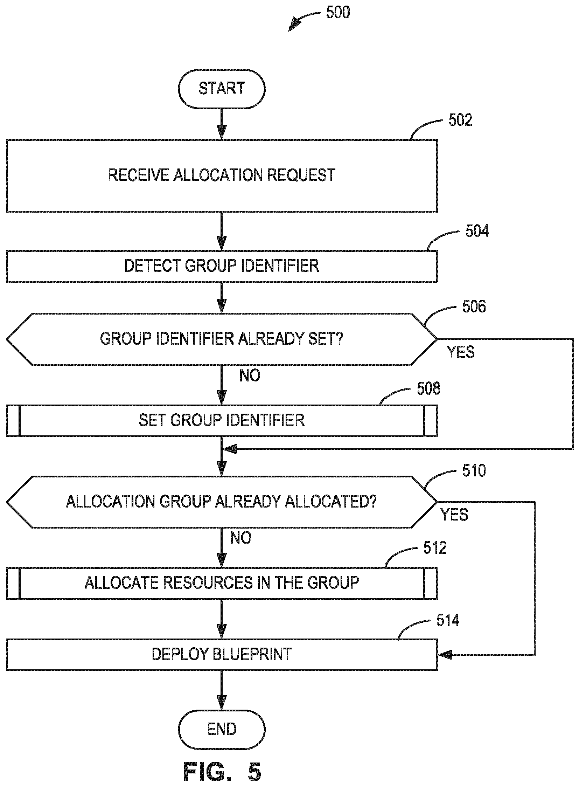

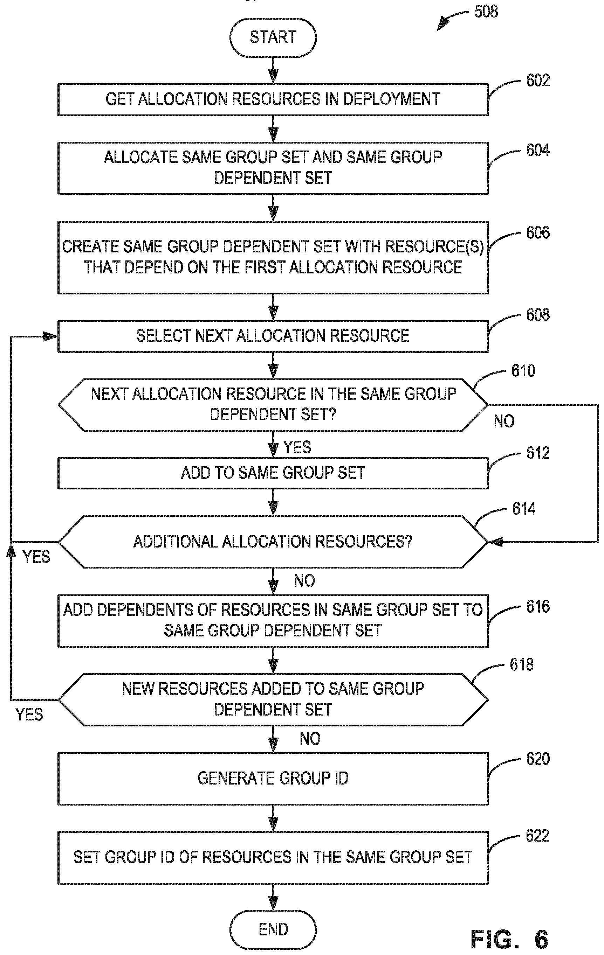

In some examples, the provisioning circuitry 102 includes means for group management to determine resources. For example, the means for group management may be implemented by the group management circuitry 210. In some examples, the group management circuitry 210 may be instantiated by programmable circuitry such as the example programmable circuitry 912 of FIG. 9. For instance, the group management circuitry 210 may be instantiated by the example microprocessor 1000 of FIG. 10 executing machine executable instructions such as those implemented by at least blocks 502-508 of FIG. 5 and 602-622 of FIG. 6. In some examples, the group management circuitry 210 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the group management circuitry 210 may be instantiated by any other combination of hardware, software, and/or firmware. For example, the group management circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example allocation circuitry 212 performs allocation for the resources based on the grouping identified by the group management circuitry 210. The example allocation of the illustrated example includes validating the requested resources towards the available configurations in the database 208 such as cloud accounts, image, network and storage profiles, project settings, and quotas, etc. For example, the available resources may be tested against affinity rules to confirm that resources of a group are to be allocated against affinity rules (e.g., are set to provisioned in the same zone, region, endpoint, etc.).

In some examples, the allocation circuitry 212 is instantiated by programmable circuitry executing registration instructions and/or configured to perform operations such as those represented by the flowchart(s) of FIG. 4.

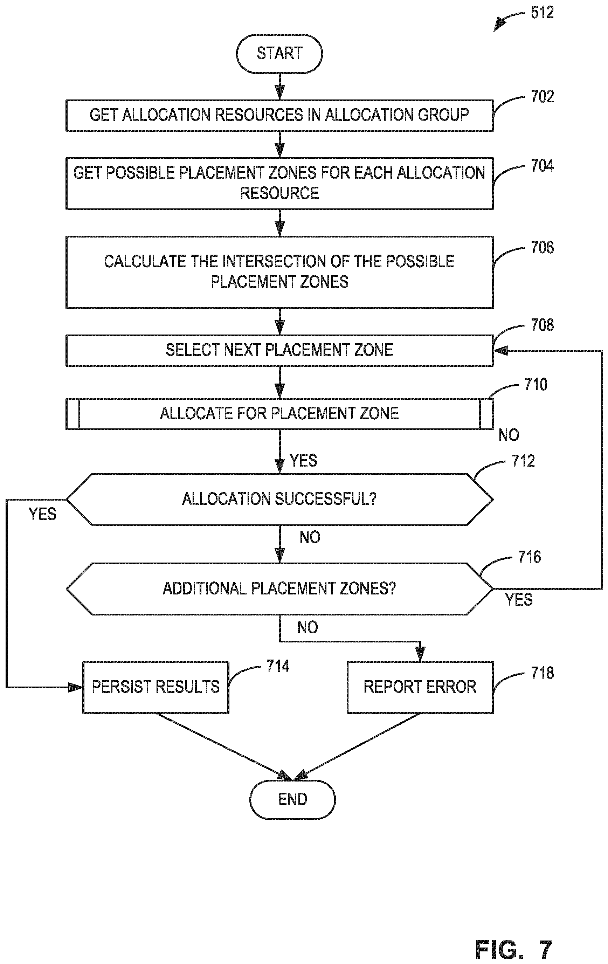

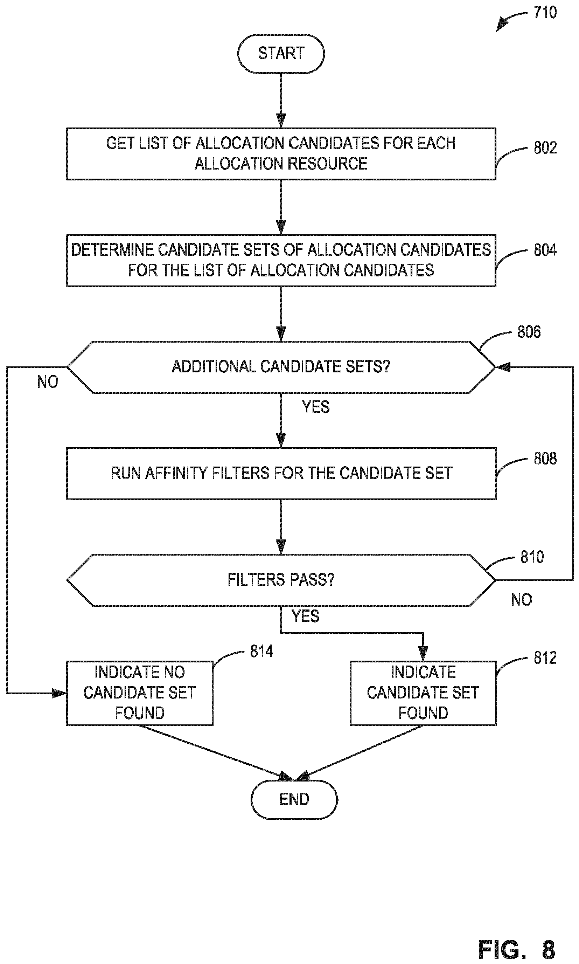

In some examples, the provisioning circuitry 102 includes means for allocating to validate resources deployments. For example, the means for allocating may be implemented by the allocation circuitry 212. In some examples, the allocation circuitry 212 may be instantiated by programmable circuitry such as the example programmable circuitry 912 of FIG. 9. For instance, the allocation circuitry 212 may be instantiated by the example microprocessor 1000 of FIG. 10 executing machine executable instructions such as those implemented by at least blocks 510-514 of FIG. 5 and 702-718 of FIG. 7 and 802-812 of FIG. 8. In some examples, the allocation circuitry 212 may be instantiated by hardware logic circuitry, which may be implemented by an ASIC, XPU, or the FPGA circuitry 1100 of FIG. 11 configured and/or structured to perform operations corresponding to the machine readable instructions. Additionally or alternatively, the allocation circuitry 212 may be instantiated by any other combination of hardware, software, and/or firmware. For example, the allocation circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the provisioning circuitry 102 of FIG. 1 is illustrated in FIG. 2, one or more of the elements, processes, and/or devices illustrated in FIG. 2 may be combined, divided, re-arranged, omitted, eliminated, and/or implemented in any other way. Further, the example registration circuitry 204, the example preallocate circuitry 206, the example group management circuitry 210, the example allocation circuitry 212 and/or, more generally, the example provisioning circuitry 102 of FIG. 2, may be implemented by hardware alone or by hardware in combination with software and/or firmware. Thus, for example, any of the example registration circuitry 204, the example preallocate circuitry 206, the example group management circuitry 210, the example allocation circuitry 212, and/or, more generally, the example provisioning circuitry 102, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example provisioning circuitry 102 of FIG. 2 may include one or more elements, processes, and/or devices in addition to, or instead of, those illustrated in FIG. 2, and/or may include more than one of any or all of the illustrated elements, processes and devices.

Flowcharts representative of example machine readable instructions, which may be executed by programmable circuitry to implement and/or instantiate the provisioning circuitry 102 of FIG. 2 and/or representative of example operations which may be performed by programmable circuitry to implement and/or instantiate the provisioning circuitry 102 of FIG. 2, are shown in FIGS. 4-8. The machine readable instructions may be one or more executable programs or portion(s) of one or more executable programs for execution by programmable circuitry such as the programmable circuitry 912 shown in the example processor platform 900 discussed below in connection with FIG. 9 and/or may be one or more function(s) or portion(s) of functions to be performed by the example programmable circuitry (e.g., an FPGA) discussed below in connection with FIGS. 10 and/or 11. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-8, many other methods of implementing the example provisioning circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-8 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Before, turning to the flowcharts of FIGS. 4-8, FIG. 3 is included to illustrate example system-level process for deploying a template such as a blueprint. For purposes of description the template manager will be referred to as the blueprinter generator 120 of the application director 106 however any type of template manager may be utilized such as any cloud template manager such as the VMware cloud template manager.

According to the illustrated example, when provisioning begins (e.g., when a request for provisioning is received by the blueprinter generator 120), the example blueprint generator 120 performs preallocation by calling a provider's preallocate operation for each of the resources to be allocated in the blueprint (block 302). The blueprint generator 120 transmits the properties of the resources identified in the preallocation to the provisioning circuitry 102. The example preallocate collector circuitry 204 stores the properties in the example database 208 (block 304).

Then, the blueprinter generator 120 calls the provider's allocation operation for each of the resources in the blueprint that are to be provisioned (block 306). The group management circuitry 210 of the provisioning circuitry 102 determines if a group identifier is set for each of the resources to be provisioned (block 308). When a group identifier is not set, the group management circuitry 210 calculates and sets a group identifier (block 310). For example, an example process for analyzing group identifiers is included in FIG. 5 and an example process for setting a group identifier is illustrated in FIG. 6.

When the group identifier is already set (block 308) or a group identifier is set in block 310, the example allocation circuitry 212 determines if an allocation group is already allocated (e.g., validated for deployment affinity) (block 312). When the group has not already been allocated, the allocation circuitry 212 performs allocation for the resources in the allocation group (block 314). For example, an example process for performing allocation is illustrated in FIGS. 7-8.

After determining that allocation has already been performed (block 312) or after performing allocation in block 314, the blueprint generator 120 performs the remaining processes to provisioning on the resources that have been selected and allocated. For example, the blueprinter generator 120 may call application programming interfaces (API) or other interfaces of the computing platform provider 110 to cause the components of the blueprint to be instantiated, implemented, deployed, etc. to the resources of the computing platform provider 110.

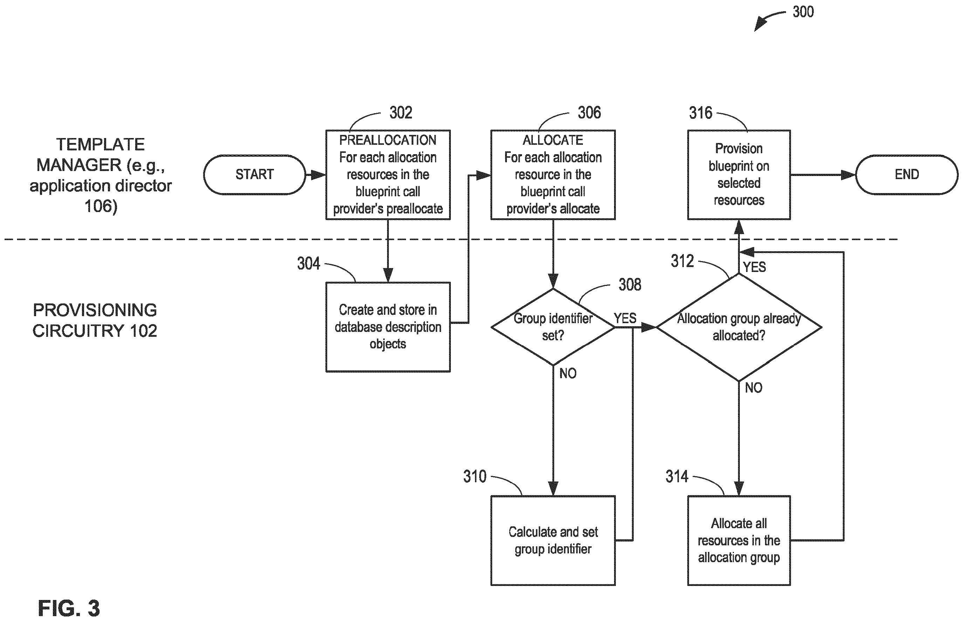

FIGS. 4-8 illustrate example processes that may be performed to implement the provisioning circuitry 102 to implement the operations associated with the example provisioning circuitry 102 in FIG. 3.

FIG. 4 is a flowchart representative of example machine readable instructions and/or example operations 400 that may be executed, instantiated, and/or performed by programmable circuitry to perform allocation of resources to be provisioned. The example machine-readable instructions and/or the example operations 400 of FIG. 4 begin at block 402, at which the registration circuitry 204 registers available allocation types with a template manager (e.g., the blueprint generator 120 of FIG. 1). While block 402 is illustrated as a single block performed prior to block 404 it should be recognized that multiple registrations may be performed over time as new allocation types and providers are identified. For example, multiple allocation types may be registered before a first provisioning begins at block 404 and additional registrations may be performed after blocks 404-408 have been performed for a first provisioning.

When a template manager has performed preallocation and transmits resources properties to the provisioning circuitry 102, the example preallocate collector circuitry 206 receives (directly or indirectly) the properties of resources for allocation (block 404). For example, the properties may be received via a network interface that transmits the properties to the preallocate collector circuitry 206, may be stored in a database accessed by the preallocate collector circuitry 206, etc. The example preallocate collector circuitry 206 stores the properties in the example database 208 (block 406). The example preallocate collector circuitry 206 then determines if there are additional resource properties to be received (block 408). If there are additional resources to be stored, control returns to block 404, otherwise the process 400 ends.

FIG. 5 is a flowchart representative of example machine readable instructions and/or example operations 500 that may be executed, instantiated, and/or performed by programmable circuitry to perform allocation operations after a template manager has performed allocation of resources.

The example machine readable instructions 500 begin at block 502 when the example group management circuitry 210 receives (directly or indirectly) an allocation request for resources from the template manager. The example group management circuitry 210 attempts to detect a group identifier (e.g., reviews properties to determine if a group identifier is included in the properties) (block 504). If a group identifier is not set for the resources, the group management circuitry 210 sets a group identifier (block 508). An example process for setting the group identifier is discussed in conjunction with the flowchart of FIG. 6.

After detecting a group identifier (block 506) or after setting the group identifier (block 508), the allocation circuitry 212 determines if an allocation group is already allocated (block 510). If the allocation group has not been allocated, the allocation circuitry 212 performs allocation on the resources in the group (block 512). An example process for performing allocation is discussed in conjunction with the flowchart illustrated in FIGS. 7-8.

After determining that allocation has already been performed (block 510) or performing allocation (block 512), the allocation circuitry 212 causes the blueprint (or other type of template) to be deployed on the resources (block 514). For example, the allocation circuitry 212 may communicate an indication that allocation is complete and/or may identify the resources for provisioning to the template manager for the template manager to complete the provisioning. The process of FIG. 5 then ends.

FIG. 6 is a flowchart representative of example machine readable instructions and/or example operations for an example implementation of block 508 that may be executed, instantiated, and/or performed by programmable circuitry to set a group identifier.

The example process 508 of FIG. 6 begins at block 602 when the example group management circuitry 210 gets allocation resources in a deployment (block 602). The example group management circuitry 210 then creates a same group set (e.g., an array) to store resources that belong to the group to be identified and creates a same group dependent set (e.g., an array) to store identifiers of resources on which the resources in the same group set depend (block 604). The example group management circuitry 210 then populates the same group set with a first resource for allocation (e.g., a first resource selected from the allocation resources from block 602) and populates the same group dependent set with the resources that depend on the first resource (block 606).

The group management circuitry 210 then selects a next allocation resource (block 608). The group management circuitry 210 determines if the next allocation resource is in the same group dependent set (block 610). If the resource is in the same group dependent set, the group management circuitry 210 adds the resource to the same group set (block 612). The group management circuitry 210 then determines if there are additional resources to be analyzed (block 614). If there are additional resources, control returns to block 608 to analyze the next resource.

If there are no additional resources to be analyzed, the group management circuitry 210 adds dependents of the resources in the same group set to the same group dependent set (block 616). Then, the group management circuitry 210 determines if any new resources have been added to the same group dependent set (block 618). If new resources have been added to the same group dependent set, control returns to block 608 to analyze the resources for possible dependencies.

Once there are no new resources added to the same group dependent set the group management circuitry 210 generates a group identifier (block 620). The group management circuitry 210 then sets the group identifier property of the resources that have been identified in a same group set. The process of FIG. 6 then ends and control returns to block 510 of FIG. 5.

While the process of FIG. 6 includes identification of a single group and assignment of a single group identifier, multiple groups and group identifiers may be identified for a blueprint. For example, multiple group set arrays may be created and resources may be iterated through and assigned to different groups based on their dependencies (e.g., resource dependencies, connection to a same network, etc.).

FIG. 7 is a flowchart representative of example machine readable instructions and/or example operations for an example implementation of block 512 that may be executed, instantiated, and/or performed by programmable circuitry to allocate resources in a group.

The example process 512 of FIG. 7 begins at block 702 when the example allocation circuitry 212 receives allocation resources in an allocation group (block 702). The allocation circuitry 212 receives possible placement zones for each allocation resource (block 704). For example, a placement zone may be a region of cloud computing to which resources may be assigned.

The example allocation circuitry 212 then calculates the intersection of the possible placement zones for the resources (block 706).

The allocation circuitry 212 then selects the next placement zone (block 708). The allocation circuitry 212 performs allocation for the placement zone (block 710). An example process for allocating a placement zone is illustrated in FIG. 8.

The allocation circuitry 212 determines if allocation was successful (block 712). If the allocation was successful, the allocation circuitry 212 persists the results (e.g., stores the results of successful resources) (block 714). If the allocation was not successful, the allocation circuitry 212 determines if there are additional possible placement zones (block 716). If there are additional placement zones, control returns to block 708 to test a next placement zone. If there are no additional placement zones, the allocation circuitry 212 provides an error indicating that there are no valid placement zones (block 718).

The process of FIG. 7 then ends and control returns to block 514.

FIG. 8 is a flowchart representative of example machine readable instructions and/or example operations for an example implementation of block 710 that may be executed, instantiated, and/or performed by programmable circuitry to perform allocation for a placement zone.

The example process 710 of FIG. 8 begins at block 802 when the allocation circuitry 212 gets a list of allocation candidates for each allocation resource. Then, the allocation circuitry 212 computes the cartesian product of the allocation candidate lists. Each N-tuple from the cartesian product is a candidate set composed of one allocation candidate from each list of allocation candidates (block 804). The allocation circuitry 212 determines if there are available candidate sets (e.g., selects the first candidate set) (block 806). If there are not additional candidate sets, control proceeds to block 814, which is described later. If there is an available candidate set, the allocation circuitry 212 runs affinity filters for the candidate set (block 808). For example, the affinity filters may test whether resources that are in a group are assigned to a same zone, a same region, a same network, etc.

The allocation circuitry 212 determines if the affinity filters generate passing results (block 810). If the affinity filters do not create passing results, control returns to block 806 to test another candidate set. If the filters pass, the allocation circuitry 212 indicates that a valid candidate set has been found (e.g., a candidate set on which the resources may be provisioned) (block 812).

If there are no additional candidate sets from block 806, the allocation circuitry 212 indicates that no valid candidate sets were found (block 814).

FIG. 9 is a block diagram of an example programmable circuitry platform 900 structured to execute and/or instantiate the example machine-readable instructions and/or the example operations of FIGS. 4-8 to implement the provisioning circuitry 102 of FIG. 2. The programmable circuitry platform 900 can be, for example, a server, a personal computer, a workstation, a self-learning machine (e.g., a neural network), or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements the registration circuitry 204, the preallocate collector circuitry, the group management circuitry 210, and the allocation circuitry 212.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 932, which may be implemented by the machine readable instructions of FIGS. 4-8, may be stored in the mass storage device 928, in the volatile memory 914, in the non-volatile memory 916, and/or on at least one non-transitory computer readable storage medium such as a CD or DVD which may be removable.

FIG. 10 is a block diagram of an example implementation of the programmable circuitry 912 of FIG. 9. In this example, the programmable circuitry 912 of FIG. 9 is implemented by a microprocessor 1000. For example, the microprocessor 1000 may be a general-purpose microprocessor (e.g., general-purpose microprocessor circuitry). The microprocessor 1000 executes some or all of the machine-readable instructions of the flowcharts of FIGS. 4-8 to effectively instantiate the circuitry of FIG. 2 as logic circuits to perform operations corresponding to those machine readable instructions. In some such examples, the circuitry of FIG. 2 is instantiated by the hardware circuits of the microprocessor 1000 in combination with the machine-readable instructions. For example, the microprocessor 1000 may be implemented by multi-core hardware circuitry such as a CPU, a DSP, a GPU, an XPU, etc. Although it may include any number of example cores 1002 (e.g., 1 core), the microprocessor 1000 of this example is a multi-core semiconductor device including N cores. The cores 1002 of the microprocessor 1000 may operate independently or may cooperate to execute machine readable instructions. For example, machine code corresponding to a firmware program, an embedded software program, or a software program may be executed by one of the cores 1002 or may be executed by multiple ones of the cores 1002 at the same or different times. In some examples, the machine code corresponding to the firmware program, the embedded software program, or the software program is split into threads and executed in parallel by two or more of the cores 1002. The software program may correspond to a portion or all of the machine readable instructions and/or operations represented by the flowcharts of FIGS. 4-8.

The cores 1002 may communicate by a first example bus 1004. In some examples, the first bus 1004 may be implemented by a communication bus to effectuate communication associated with one(s) of the cores 1002. For example, the first bus 1004 may be implemented by at least one of an Inter-Integrated Circuit (I2C) bus, a Serial Peripheral Interface (SPI) bus, a PCI bus, or a PCIe bus. Additionally or alternatively, the first bus 1004 may be implemented by any other type of computing or electrical bus. The cores 1002 may obtain data, instructions, and/or signals from one or more external devices by example interface circuitry 1006. The cores 1002 may output data, instructions, and/or signals to the one or more external devices by the interface circuitry 1006. Although the cores 1002 of this example include example local memory 1020 (e.g., Level 1 (L1) cache that may be split into an L1 data cache and an L1 instruction cache), the microprocessor 1000 also includes example shared memory 1010 that may be shared by the cores (e.g., Level 2 (L2 cache)) for high-speed access to data and/or instructions. Data and/or instructions may be transferred (e.g., shared) by writing to and/or reading from the shared memory 1010. The local memory 1020 of each of the cores 1002 and the shared memory 1010 may be part of a hierarchy of storage devices including multiple levels of cache memory and the main memory (e.g., the main memory 914, 916 of FIG. 9). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1002 may be referred to as a CPU, DSP, GPU, etc., or any other type of hardware circuitry. Each core 1002 includes control unit circuitry 1014, arithmetic and logic (AL) circuitry (sometimes referred to as an ALU) 1016, a plurality of registers 1018, the local memory 1020, and a second example bus 1022. Other structures may be present. For example, each core 1002 may include vector unit circuitry, single instruction multiple data (SIMD) unit circuitry, load/store unit (LSU) circuitry, branch/jump unit circuitry, floating-point unit (FPU) circuitry, etc. The control unit circuitry 1014 includes semiconductor-based circuits structured to control (e.g., coordinate) data movement within the corresponding core 1002. The AL circuitry 1016 includes semiconductor-based circuits structured to perform one or more mathematic and/or logic operations on the data within the corresponding core 1002. The AL circuitry 1016 of some examples performs integer based operations. In other examples, the AL circuitry 1016 also performs floating-point operations. In yet other examples, the AL circuitry 1016 may include first AL circuitry that performs integer-based operations and second AL circuitry that performs floating-point operations. In some examples, the AL circuitry 1016 may be referred to as an Arithmetic Logic Unit (ALU).

The registers 1018 are semiconductor-based structures to store data and/or instructions such as results of one or more of the operations performed by the AL circuitry 1016 of the corresponding core 1002. For example, the registers 1018 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1018 may be arranged in a bank as shown in FIG. 10. Alternatively, the registers 1018 may be organized in any other arrangement, format, or structure, such as by being distributed throughout the core 1002 to shorten access time. The second bus 1022 may be implemented by at least one of an I2C bus, a SPI bus, a PCI bus, or a PCIe bus.

Each core 1002 and/or, more generally, the microprocessor 1000 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1000 is a semiconductor device fabricated to include many transistors interconnected to implement the structures described above in one or more integrated circuits (ICs) contained in one or more packages.

The microprocessor 1000 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1000, in the same chip package as the microprocessor 1000 and/or in one or more separate packages from the microprocessor 1000.

FIG. 11 is a block diagram of another example implementation of the programmable circuitry 912 of FIG. 9. In this example, the programmable circuitry 912 is implemented by FPGA circuitry 1100. For example, the FPGA circuitry 1100 may be implemented by an FPGA. The FPGA circuitry 1100 can be used, for example, to perform operations that could otherwise be performed by the example microprocessor 1000 of FIG. 10 executing corresponding machine readable instructions. However, once configured, the FPGA circuitry 1100 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1000 of FIG. 10 described above (which is a general purpose device that may be programmed to execute some or all of the machine readable instructions represented by the flowchart(s) of FIGS. 4-8 but whose interconnections and logic circuitry are fixed once fabricated), the FPGA circuitry 1100 of the example of FIG. 11 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4-8. In particular, the FPGA circuitry 1100 may be thought of as an array of logic gates, interconnections, and switches. The switches can be programmed to change how the logic gates are interconnected by the interconnections, effectively forming one or more dedicated logic circuits (unless and until the FPGA circuitry 1100 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4-8. As such, the FPGA circuitry 1100 may be configured and/or structured to effectively instantiate some or all of the operations/functions corresponding to the machine readable instructions of the flowchart(s) of FIGS. 4-8 as dedicated logic circuits to perform the operations/functions corresponding to those software instructions in a dedicated manner analogous to an ASIC. Therefore, the FPGA circuitry 1100 may perform the operations/functions corresponding to the some or all of the machine readable instructions of FIGS. 4-8 faster than the general-purpose microprocessor can execute the same.

In the example of FIG. 11, the FPGA circuitry 1100 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1100 of FIG. 11 may access and/or load the binary file to cause the FPGA circuitry 1100 of FIG. 11 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1100 of FIG. 11 to cause configuration and/or structuring of the FPGA circuitry 1100 of FIG. 11, or portion(s) thereof.

The FPGA circuitry 1100 of FIG. 11, includes example input/output (I/O) circuitry 1102 to obtain and/or output data to/from example configuration circuitry 1104 and/or external hardware 1106. For example, the configuration circuitry 1104 may be implemented by interface circuitry that may obtain a binary file, which may be implemented by a bit stream, data, and/or machine-readable instructions, to configure the FPGA circuitry 1100, or portion(s) thereof. In some such examples, the configuration circuitry 1104 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1106 may be implemented by external hardware circuitry. For example, the external hardware 1106 may be implemented by the microprocessor 1000 of FIG. 10.

The FPGA circuitry 1100 also includes an array of example logic gate circuitry 1108, a plurality of example configurable interconnections 1110, and example storage circuitry 1112. The logic gate circuitry 1108 and the configurable interconnections 1110 are configurable to instantiate one or more operations/functions that may correspond to at least some of the machine readable instructions of FIGS. 4-8 and/or other desired operations. The logic gate circuitry 1108 shown in FIG. 11 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1108 to enable configuration of the electrical structures and/or the logic gates to form circuits to perform desired operations/functions. The logic gate circuitry 1108 may include other electrical structures such as look-up tables (LUTs), registers (e.g., flip-flops or latches), multiplexers, etc.

The configurable interconnections 1110 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1108 to program desired logic circuits.

The storage circuitry 1112 of the illustrated example is structured to store result(s) of the one or more of the operations performed by corresponding logic gates. The storage circuitry 1112 may be implemented by registers or the like. In the illustrated example, the storage circuitry 1112 is distributed amongst the logic gate circuitry 1108 to facilitate access and increase execution speed.

The example FPGA circuitry 1100 of FIG. 11 also includes example dedicated operations circuitry 1114. In this example, the dedicated operations circuitry 1114 includes special purpose circuitry 1116 that may be invoked to implement commonly used functions to avoid the need to program those functions in the field. Examples of such special purpose circuitry 1116 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1100 may also include example general purpose programmable circuitry 1118 such as an example CPU 1120 and/or an example DSP 1122. Other general purpose programmable circuitry 1118 may additionally or alternatively be present such as a GPU, an XPU, etc., that can be programmed to perform other operations.

Although FIGS. 10 and 11 illustrate two example implementations of the programmable circuitry 912 of FIG. 9, many other approaches are contemplated. For example, FPGA circuitry may include an on-board CPU, such as one or more of the example CPU 1120 of FIG. 10. Therefore, the programmable circuitry 912 of FIG. 9 may additionally be implemented by combining at least the example microprocessor 1000 of FIG. 10 and the example FPGA circuitry 1100 of FIG. 11. In some such hybrid examples, one or more cores 1002 of FIG. 10 may execute a first portion of the machine readable instructions represented by the flowchart(s) of FIGS. 4-8 to perform first operation(s)/function(s), the FPGA circuitry 1100 of FIG. 11 may be configured and/or structured to perform second operation(s)/function(s) corresponding to a second portion of the machine readable instructions represented by the flowcharts of FIG. 4-8, and/or an ASIC may be configured and/or structured to perform third operation(s)/function(s) corresponding to a third portion of the machine readable instructions represented by the flowcharts of FIGS. 4-8.

It should be understood that some or all of the circuitry of FIG. 2 may, thus, be instantiated at the same or different times. For example, same and/or different portion(s) of the microprocessor 1000 of FIG. 10 may be programmed to execute portion(s) of machine-readable instructions at the same and/or different times. In some examples, same and/or different portion(s) of the FPGA circuitry 1100 of FIG. 11 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1000 of FIG. 10 may execute machine readable instructions in one or more threads executing concurrently and/or in series. In some examples, the FPGA circuitry 1100 of FIG. 11 may be configured and/or structured to carry out operations/functions concurrently and/or in series. Moreover, in some examples, some or all of the circuitry of FIG. 2 may be implemented within one or more virtual machines and/or containers executing on the microprocessor 1000 of FIG. 10.

In some examples, the programmable circuitry 912 of FIG. 9 may be in one or more packages. For example, the microprocessor 1000 of FIG. 10 and/or the FPGA circuitry 1100 of FIG. 11 may be in one or more packages. In some examples, an XPU may be implemented by the programmable circuitry 912 of FIG. 9, which may be in one or more packages. For example, the XPU may include a CPU (e.g., the microprocessor 1000 of FIG. 10, the CPU 1120 of FIG. 11, etc.) in one package, a DSP (e.g., the DSP 1122 of FIG. 11) in another package, a GPU in yet another package, and an FPGA (e.g., the FPGA circuitry 1100 of FIG. 11) in still yet another package.

A block diagram illustrating an example software distribution platform 1205 to distribute software such as the example machine readable instructions 932 of FIG. 9 to other hardware devices (e.g., hardware devices owned and/or operated by third parties from the owner and/or operator of the software distribution platform) is illustrated in FIG. 12. The example software distribution platform 1205 may be implemented by any computer server, data facility, cloud service, etc., capable of storing and transmitting software to other computing devices. The third parties may be customers of the entity owning and/or operating the software distribution platform 1205. For example, the entity that owns and/or operates the software distribution platform 1205 may be a developer, a seller, and/or a licensor of software such as the example machine readable instructions 932 of FIG. 9. The third parties may be consumers, users, retailers, OEMs, etc., who purchase and/or license the software for use and/or re-sale and/or sub-licensing. In the illustrated example, the software distribution platform 1205 includes one or more servers and one or more storage devices. The storage devices store the machine readable instructions 932, which may correspond to the example machine readable instructions of FIGS. 4-8, as described above. The one or more servers of the example software distribution platform 1205 are in communication with an example network 1210, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 932 from the software distribution platform 1205. For example, the software, which may correspond to the example machine readable instructions of FIG. 4-8, may be downloaded to the example programmable circuitry platform 900, which is to execute the machine readable instructions 932 to implement the provisioning circuitry 102. In some examples, one or more servers of the software distribution platform 1205 periodically offer, transmit, and/or force updates to the software (e.g., the example machine readable instructions 932 of FIG. 9) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed that facilitate provisioning including allocation (e.g., validation of resource rules) associated with provisioning of resources in computing environments. Disclosed systems, apparatus, articles of manufacture, and methods improve the efficiency of using a computing device by facilitating the allocation of resources prior to provisioning, which may reduce wasted computing resources due to provisioning that partially fails resulting in a need to reverse deployment.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus to manage provisioning of computing resources, the apparatus comprising:
network interface circuitry;
computer readable instructions; and
programmable circuitry to instantiate:
group management circuitry to determine a group identifier associated with a resource to be provisioned;
allocation circuitry to:
determine an intersection of placements for resources associated with the group identifier;
validate a placement rule for the intersection; and
cause provisioning of the resources when the placement rule passes.

2. The apparatus of claim 1, further including
registration circuitry to register allocation types with a template manager.

3. The apparatus of claim 1 or 2, further comprising:
a database;
preallocate collector circuitry to:
collect properties of resources to be provisioned; and
cause the properties to be stored in the database.

4. The apparatus of any one of the claims 1 to 3, wherein
the group management circuitry is to determine a group of resources based on dependencies of the group of resources.

5. The apparatus of any one of the claims 1 to 4, wherein
the placements are placement zones.

6. The apparatus of any one of the claims 1 to 5, wherein
the rule is an affinity rule.

7. The apparatus of any one of the claims 1 to 6, wherein
the rule specifies that resources of a group are to be provisioned in a single placement.

8. A method to manage cloud resources, the method comprising:
determining a group identifier associated with a resource to be provisioned;
determining an intersection of placements for resources associated with the group identifier;
validating a placement rule for the intersection; and
causing provisioning of the resources when the placement rule passes.

9. The method of claim 8, further including
registering allocation types with a template manager.

10. The method of claim 8 or 9, further including:
collecting properties of resources to be provisioned; and
causing the properties to be stored in a database.

11. The method of any one of the claims 8 to 10, further including
determining a group of resources based on dependencies of the group of resources.

12. The method of any one of the claims 8 to 11, wherein
the placements are placement zones.

13. The method of any one of the claims 8 to 12, wherein
the rule is an affinity rule.

14. The method of any one of the claims 8 to 13, wherein
the rule specifies that resources of a group are to be provisioned in a single placement.

15. A non-transitory computer readable storage medium comprising instructions that, when executed, cause a processor to at least carry out and/or control a method as set forth in any one of the preceding method claims.
